# EUROPEAN PATENT APPLICATION

(11) **EP 2 258 455 A1**
(43) Date of publication of application: **08.12.2010**
(21) Application number: 10250928.8
(22) Date of filing: 14.05.2010
(51) Int. Cl.: A63B 55/08

(54) **Winter wheel for a golf trolley**

(30) Priority: 03.06.2009 GB 0909498
(71) Applicant: Powakaddy International Limited, Sittingbourne Kent ME10 3RN (GB)
(72) Inventor: Porter, Glenn, Sittingbourne, Kent, ME10 3RN (GB); Fung, Mark, Sittingbourne, Kent, ME10 3RN (GB)
(74) Representative: Townsend, Victoria Jayne

(57) **Abstract**

There is provided a tyre for a winter wheel comprising an annular body 1 provided with a pattern of extruded cut outs 5a, 5b normal to the surface of the outer diameter. The pattern is desirably symmetrical about the centre line of the circumferential tyre surface. Conveniently the pattern may be a repeated pattern of a single shaped cut out. Alternatively two or more shaped or sized cut outs may be used to make up the pattern. The resulting tyre provides a balance between traction to provide grip needed for climbs on uneven soft ground combined with a reduced contact area to the ground to minimise track formation.

## Description

The present invention relates to wheels for vehicles which routinely travel on soft ground, in particular but not limited to motorised golf trolleys.

It is a recognised problem that in soft ground, particularly after damp weather, golf trolleys and other wheeled equipment can leave unsightly track marks and can cause damage to greenery on which they travel. A conventional golf trolley wheel comprises of an inner structure and a tyre. Tyres have little tread and consequently little traction. Loss of traction on soft ground causes grinding against a soft surface and consequent marking of the surface beneath the tyre. As a consequence, the use of golf trolleys is often banned during wet seasons when the grounds of the course are very soft. A further disadvantage of conventional wheels on a motorised vehicle such as a golf trolley is that this slipping of the wheels drains the trolley's battery.

Attempts have been made to produce wheels or wheel adaptors which reduce the damage caused by golf trolleys on courses during wet weather. One example is known as the The Hedgehog Fairway Protector^{®}. The device is clipped retrospectively about the circumferences of the wheels of a pull trolley and has parabolic, radially extending studs which, it is claimed reduce contact with the soil surface by over 75% and glide over a soft ground surface leaving little or no impression inflicting little or no damage to the ground. The device is not suitable for use on motorised trolleys.

Motocaddy^{®} also produces a winter wheel which comprises a solid, moulded wheel having a raised, waffled tread. The wheel is suited to motorised golf trolleys.

The present invention seeks to provide an alternative design of winter wheel which minimises damage to soft ground and which is suited to use on a motorised vehicle such as a golf cart.

In accordance with the present invention there is provided a tyre for a winter wheel comprising an annular body provided with a pattern of extruded cut outs normal to the surface of the outer diameter.

The pattern is desirably symmetrical about the centre line of the circumferential tyre surface. Conveniently the pattern may be a repeated pattern of a single shaped cut out. Alternatively two or more shaped or sized cut outs may be used to make up the pattern.

Preferably the cut outs are suitably numbered and proportioned to reduce the initial contact surface area of the tyre with the ground by 50% or, more preferably by 60% or more and most preferably by 75% or more.

The configuration of the cut outs is selected so that the cut outs can be arranged in close proximity minimising the surface area of the initial contact surface are of the tyre. For example, but with out limitation, the shapes of the cut outs may be selected from; circles, diamonds, or polygons with an even number of sides. Desirable the shaped cut-outs are dispersed in interleaving parallel rows. Optionally two or more differently shaped or sized cut outs may be selected and arranged to minimise the contact surface area of the tyre.

The cut outs preferably incline radially inwardly to provide greater structural strength with minimal impact on contact surface area of the tyre

In one embodiment, the pattern comprises a plurality of similarly sized hexagonal and half hexagonal shaped cut outs arranged in three interleaving rows, a main row of hexagonal cut outs extends along the centre line of the tyre and a row of half hexagons sits either side interleaving between the hexagons of the main row and extending to the outer rim of the tyre. The cut outs incline radially inwardly.

The tyre is desirably moulded from a plastic, rubber or rubber like material.

The described tyre provides a balance between traction to provide grip needed for climbs on uneven ground combined with a reduced contact area to the ground to minimise track formation. The design is also advantageous in that it saves on material costs and is lighter weight than other tyres for transport.

The invention further comprises a winter wheel incorporating the tyre already described.

Desirably the wheel comprises three main parts; an inner ring onto which the tyre is over moulded and an inner hub fixed to the inner ring to provide strength and balance to the wheel.

The wheel may further comprise an outer hub which may provide structural reinforcement and a cosmetic face. The outer hub may be easily changeable to allow altering of the cosmetic appearance of the wheel.

The invention further comprises a motorised golf trolley incorporating novel wheels of the form described above.

One embodiment of a tyre and wheel suitable for use on a motorised golf trolley is now described with reference to the accompanying figures in which;
Figure 1 is a front perspective view of the wheel without universal cap and button;
Figure 2 is a rear perspective view of the wheel without universal cap and button;
Figure 3 is an exploded view of figure 1 with a sectional cut out of the tyre;
Figure 4 illustrates the manufacturing method that allows the embodiment of the Inner Hub (5) to the wheel.

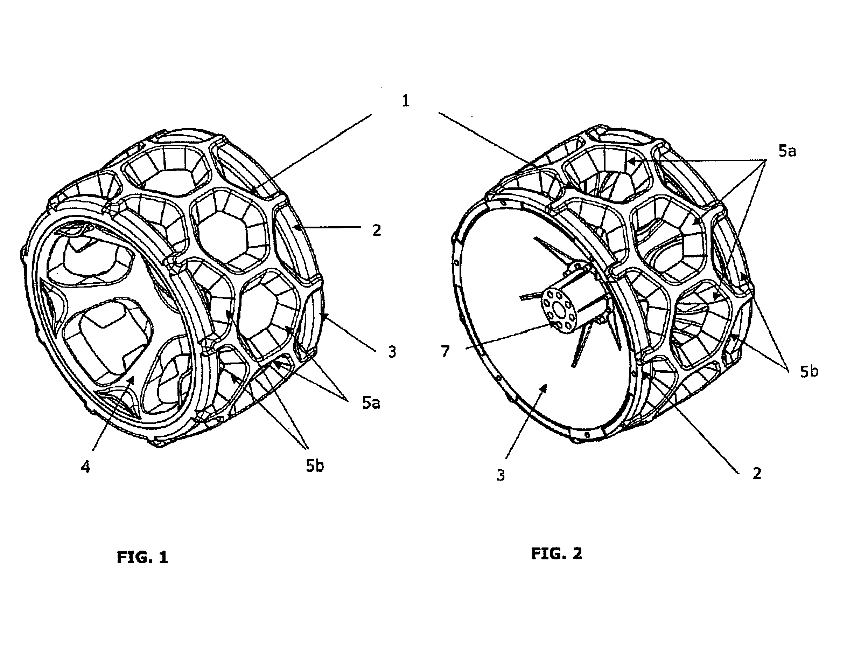

As can be seen from Figures 1 and 2, a wheel in accordance with the invention comprises a tyre 1, an inner ring 2, an inner hub 3 fastened to the inner ring 2 and an outer hub 4 on the side opposing the inner hub 3 and ring 2. The tread of the tyre 1 is provided by a plurality of hexagonal 5a and half hexagonal cut outs 5b symmetrically arranged In three interleaving rows encircling the circumferential contact surface of the tyre 1. The inner hub 3 can conveniently by clipped onto the inner ring piece 2 by means of a plurality of pegs 6a on the hub 4 and mating holes 6b on the ring piece 2. The outer hub 4 extends axially inwardly of the tyre to provide structural support and a centrally located tube 7 which fits onto an axle of the vehicle to which the wheel is to be fitted. For example, the vehicle may be a motorised golf trolley. The tube 7 passes through and fits snugly in a mating hole 8 in the inner hub 3 providing stability and structural support to the wheel.

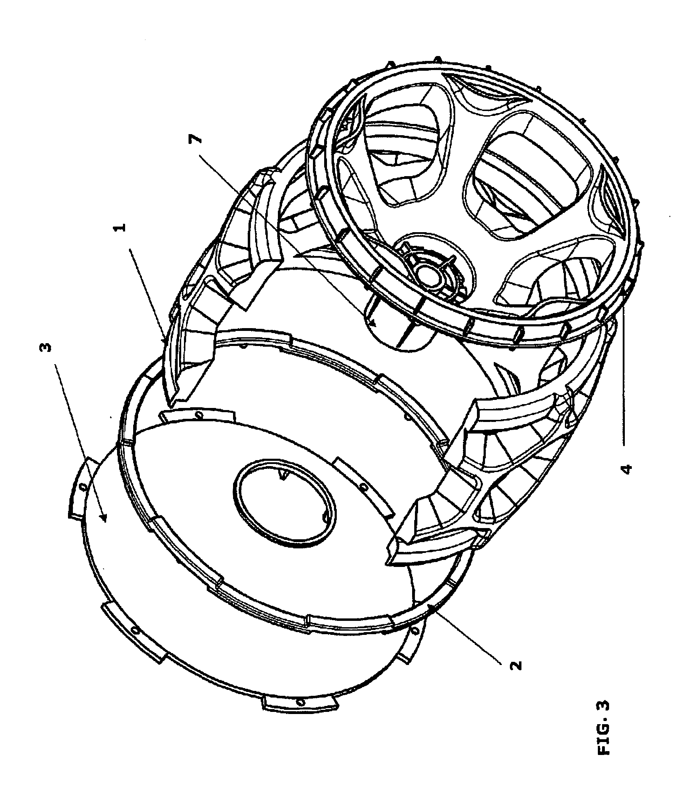

Figure 3 shows an exploded and cut out view of the wheel of Figures 1 and 2 demonstrating how the component parts are assembled together.

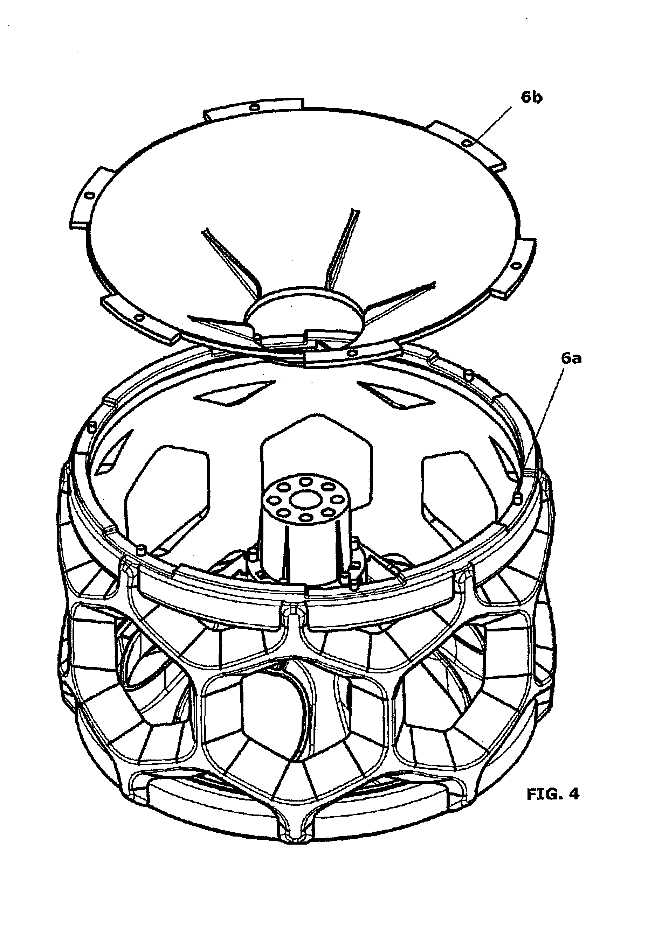

Figure 4 shows a top perspective view of the assembled wheel with the inner hub 3 poised to be clipped to the main body of the wheel.

The main body of the wheel is manufactured in four component parts, the tyre 1, the inner ring piece 2, the inner hub 3 and the outer hub 4. The tyre 1 is conveniently moulded with the cut outs 5a, 5b integrated into the mould, though alternatively the cut outs 5a, 5b may be machined from a solid tube template. The tyre 1 is desirably over moulded to the inner ring piece 2 but may be otherwise mechanically secured or chemically bonded. The inner hub 4 is fitted under the tyre 1. The inner hub 3 is then located in position using the pegs 6a and mating holes 6b and is heat staked to retain its position. The outer hub 4 is configured to clip under the tyre 1. Once the tube 7 of the outer hub is secured to an axle, the wheel becomes balanced and structurally sound. The outer circumferential surfaces of the tube 7 and outer hub 4 are ribbed to assist in securely gripping with the engaging surfaces of the tyre 1 and wall defining the hole 8 of the inner hub 3.

## Claims

1. A golf trolley suitable for use on damp ground, the trolley having a wheel axle fitted with a winter wheel, the tyre (1) of the winter wheel comprising an annular body provided with a pattern of extruded cut outs (5a,5b) normal to the surface of the outer diameter.

2. A golf trolley as claimed In claim 1 wherein the pattern (5a, 5b) is symmetrical about the centre line of the circumferential tyre surface.

3. A golf trolley as claimed in claim 1 or claim 2 wherein the pattern comprises a repeated pattern of a single shaped cut out.

4. A golf trolley as claimed in claim 3 wherein the shape of the cut out is selected from circles, diamonds, or polygons with an even number of sides.

5. A golf trolley as claimed in any proceeding claims wherein the cut outs are inclined radially inwardly.

6. A golf trolley as claimed in claim 4 or claim 5 comprising a plurality of similarly sized hexagonal (6a) and half hexagonal (6b) shaped cut outs arranged in three interleaving rows; a main row of hexagonal cut outs extending along the centre line of the tyre and a row of half hexagons sitting either side interleaving between the hexagons of the main row and extending to the outer rim of the tyre.

7. A golf trolley as claimed in any of claims 1 to 6, wherein the tyre (1) is over moulded to an inner ring (2), an inner hub (3) is secured to the inner ring (2) and an outer wheel hub (4) engaging at its centre with the inner hub (3) to provide a mount for the wheel axle.

8. A golf trolley as claimed in any of claims 1 to 7 wherein the trolley is motorised.

9. A wheel configured for attachment to a motorised golf trolley the wheel configured so as to provide when attached to the motorised golf trolley, a golf trolley in accordance with claim 8.
